# EUROPEAN PATENT SPECIFICATION

(11) **EP 4 013 077 B1**
(45) Date of publication and mention of the grant of the patent: **30.10.2024**
(21) Application number: 20213594.3
(22) Date of filing: 11.12.2020
(51) Int. Cl.: H04W 4/02, G01S 5/02, G08G 1/16, H04W 84/18, H04W 4/38, H04W 4/46

(54) **INTER-VEHICLE COMMUNICATION BASED DYNAMIC SENSOR OPERATION**
AUF KOMMUNIKATION ZWISCHEN FAHRZEUGEN BASIERENDER DYNAMISCHER SENSORBETRIEB
FONCTIONNEMENT DE CAPTEUR DYNAMIQUE BASÉ SUR LA COMMUNICATION ENTRE VÉHICULES

(43) Date of publication of application: 15.06.2022
(73) Proprietor: VOLKSWAGEN AG, 38440 Wolfsburg (DE)
(72) Inventor: Martinez Flores, Yael Abelardo, 38444 Wolfsburg (DE); Kain, Tobias, 38446 Wolfsburg (DE); Wesche, Maximilian, 31234 Edemissen (DE); Müller, Julian-Steffen, 30161 Hannover (DE)

(56) References cited:
- CN-A- 109 278 752
- US-A1- 2015 019 063
- US-A1- 2020 255 026

## Description

### Field of the Invention

The present disclosure generally relates to the field of vehicle sensors operation and control thereof and particularly to a method for controlling the operation of at least one directional sensor in a vehicle as well as to an electronic apparatus for performing such method and to a vehicle comprising such electronic apparatus.

### Technological Background

Increasingly, various sensor technologies are being utilized in vehicles, for improving the safety of the vehicle as well as for assisting or controlling different automatic driving operations such as steering, breaking, and acceleration. In similar regards, publication CN 109 278 752 B relates to methods for optimizing the energy consumption of a plug-in hybrid vehicle by predicting the future speed of the vehicle based on a map constructed from environment information obtained from multiple vehicles, and publication US 2020/255026 A1 relates to methods for generating driving recommendations to a vehicle based on environmental information collected from one or more agents.

Automatic or assisted driving technologies at various levels provide a potential for enhancing the safety of transportation by reducing the dependency on human factors, and replacing or complementing the human control of the vehicle with an electronic or machine control of the vehicle, relying on sensor information for accurately detecting the position of the vehicle and mapping the surrounding environment of the vehicle for objects that may affect the driving operation. As used herein, the term "automatic driving" may be interchangeable with the term "assisted driving" and indicates a technology wherein some or all of the driving operation of a vehicle is controlled to a certain extent by a control unit, i.e., by a programmable device.

It is appropriate that the safety requirements of such automatic driving technologies are rigorous, as a failure to provide proper control of the vehicle, may lead to adverse situations for occupants of the vehicle, or to people and objects surrounding the vehicle. These safety requirements rely on the quality of the sensor data provided to the control unit responsible for the automatic driving functionality, as well as the timeliness and quality of the analysis performed on the sensor data. Additionally, to provide failure proofing, sensor redundancies are designed in the vehicles, such that if an error occurs in one of the sensors, automatic driving may still be provided. Vehicle driving control, ranging from driver assist functionalities up to different degrees of automatic driving, requires accurate measurement of the surrounding environment of the vehicle for detecting road features, road signs and billboards, neighboring vehicles, pedestrians, animals or other objects that could affect the automatic driving operation of the vehicle. Commonly, a controller obtains signals from the sensors, and generates or updates an environment mapping surrounding the vehicle, based on which driving instructions are derived.

Some of the properties that determine the sensor data quality and characteristics include:
- The range and spatial coverage of the data. Operating the sensors for providing higher range and coverage, may require the use of high-power signals.
- The spatial resolution of the data. Operating the sensors for providing higher spatial resolutions may require spatially finer samples, or higher bit-count per sample.
- The temporal resolution of the data. Operating the sensors for providing higher temporal resolutions may require increasing the sample rate of the sensors.
- The signal to noise ratio of the data, and its dependence on surrounding factors. Operating the sensors for providing higher signal to noise ratio may require the use of high-power signals, sensor redundancies, or noise filtration techniques.

Thus, providing an increased range and coverage, as well as an increased spatial and temporal resolution, requires more processing power for analyzing the signals for facilitating the automatic driving of the vehicle. Furthermore, vehicles may utilize different sensor technologies simultaneously, where different sensor technologies may provide different properties, such as resolution, range, coverage, and susceptibility for external affecting factors. Some of the sensor technologies used for the purpose of controlling the driving of vehicles include artificial vision, such as cameras in different configurations, Radar, LiDAR (Light Detection And Ranging), as well as ultrasonic technology. Accordingly, maintaining sufficient safety criteria is associated with an increase of power consumption related operating the sensors and analyzing the data obtained therefrom.

The operation of various sensors and the processing of the signals obtained therefrom can consume significant amounts of energy, which may drain the battery of the vehicle and affect the driving range or other functionalities. Hence, there is a need for enhancing the power consumption profile related to the sensors, while maintaining safety criteria for controlling driving operations of the vehicles.

It is thus an object of the present disclosure to overcome or reduce at least some of the drawbacks of the prior art and to provide a method for operating a directional sensor of a vehicle that allows for optimizing the energy consumption of the vehicle.

### Description of Invention

According to an aspect of the present disclosure, there is provided a method for controlling the operation of a directional sensor in a vehicle. The method includes the step of obtaining information indicative of a location of a second vehicle. Preferably, the information indicative of a location of a second vehicle is obtained via at least one sensor. However, it could also be obtained by at least one communication module.

The method further comprises the step of determining a position of the second vehicle relative to the vehicle, i.e., a relative position of the second vehicle. As used herein, the term "relative position" refers to a position of the second vehicle relative to the first vehicle, or vehicle. The relative position may include a distance value and a direction value. Preferably, the position of the second vehicle relative to the vehicle is determined based on the obtained information indicative of a location of a second vehicle. Further, information regarding a position of the vehicle, e.g., GPS date, is preferably used for determining the position of the second vehicle. According to a preferred embodiment, the vehicle may further determine a relative velocity of the second vehicle, for assessing or predicting changes in the relative position of the second vehicle. As used herein, the term "relative velocity" refers to a rate of change in position of the second vehicle relative to the first vehicle, or vehicle. The relative velocity may include a speed value and a direction value.

Another step of the method refers to, based on the second vehicle being within a critical range/distance of the vehicle, receiving driving-related information from the second vehicle. In other words, the driving-related information is received from the second vehicle, if the determined relative position of the second vehicle indicates that it is within a critical range/distance of the vehicle. In other words, the vehicle is configured to determine whether the second vehicle is within a critical range. Preferably, a critical range is defined as a range in which an operation of a directional sensor in the vehicle may be adjusted based on driving-related information from the second vehicle. A critical range may be a predetermined range surrounding the vehicle, such as an elliptical, circular, or rectangular range surrounding the vehicle. The critical range may be symmetrical around the vehicle, such that the vehicle is positioned in the center of the critical. Alternatively, the critical range may be further distanced from the vehicle in the front/driving direction compared to the rear direction. Alternatively or additionally, the critical range may be dynamically determined based on factors related to the driving of the vehicle, such as visibility, speed of driving, road conditions, and the like.

The driving-related information received from the second vehicle may include measurements and information provided by sensors on the second vehicle, such as raw sensor data, and/or mapped information derived at least partially therefrom, such as mapped detected objects and features. Furthermore, driving-related information of the second vehicle may include a position of the second vehicle, a velocity of the second vehicle, and/or planned route of the second vehicle. The driving-related information of the second vehicle may include data from a plurality of directional sensors in the second vehicle. Optionally, the vehicle may determine the position and/or velocity of the second vehicle by analyzing information obtained from a sensor on the vehicle, by utilizing the received driving related-information of the second vehicle, or a combination thereof.

The driving-related information from the second vehicle is preferably received via vehicle-to-vehicle communication, that is via at least one communication interface. Such communication interface between different vehicles, or between vehicles and other entities such as roadside units, RSUs, and are referred to as vehicle to vehicle, V2V, communication or a vehicle to everything, V2X, communication, respectively. In V2V communication, the communication interface may include communication between two or more vehicles. Both V2V and V2X communication may be carried out either as point-to-point (unicast) communication or as point-to-multipoint (multicast/broadcast) communication. V2V communication may be carried out in a LTE or 5G network with sidelink carries at the PHY layer (PC5 sidelink) or based on WLAN communication according to IEEE 802.11p standard.

The method of the present disclosure further comprises the step of adjusting an operation of the directional sensor in the vehicle based on the determined position of the second vehicle relative to the vehicle and the received driving-related information from the second vehicle. Therein the driving-related information includes a directional sensor measurement, or information derived from a sensor measurement.

In other words, a V2V communication may be established between the (first) vehicle and the second vehicle, wherein driving-related information is communicated from the second vehicle to the first vehicle, such that, based on the driving-related information received from the second vehicle, the first vehicle may adjust or control an operation of a directional sensor therein. As used herein, the term "directional sensor" is interchangeably used with the terms "sensors", "sensor system", and/or "directional sensor system", and refers to a sensor with directional properties, e.g., to:
- A sensor configured to perform measurements in a certain direction.
- A sensor configured to perform measurements in a plurality of directions controllably, such that the operation of the sensor related to one direction out of the plurality of directions may be controlled independently of the operation of the sensor related to other directions.
- A sensor configured to perform measurements in one or more directions, while providing a signal indicative of the measurement with directional information, such that the signal provided from the sensor can be analyzed in one direction differently than other directions.
- A group of sensors with different orientations, each of the sensors in the group of sensors being configured to perform measurements in a certain direction.

Adjusting an operation of the directional sensor may be achieved by adjusting the sensor directly, and/or adjusting an analysis conducted on the data received from the sensor. According to some embodiments, adjusting the sensor directly may be conducted by one or more of the following means:
- Altering a range of the sensor, for example by changing an intensity of a measurement signal provided by the sensor to control the radial reach or range of the sensor, or changing the angle of sampling to control the angular reach or range of the sensor.
- Altering a spatial resolution of the sensor, for example by reducing the number of bits, or bit-count, of each sample.
- Altering a temporal resolution of the sensor, for example by reducing the sampling rate of the sensor or increasing the intermittency of sampling of the sensor.
- Altering a noise reduction functionality of the sensor.

Alternatively, or in combination to adjusting the sensor directly, adjusting an operation of a sensor may include adjusting an analysis conducted on the data received from the sensor, which may include changing one or more of an analysis rate, analysis latency, noise reduction functions, and the like.

The invention is defined in the independent claims. The dependent claims define additional embodiments.

### Brief Description of the Drawings

Examples illustrative of embodiments are described below with reference to figures attached hereto. In the figures, identical structures, elements or parts that appear in more than one figure are generally labeled with a same numeral in all the figures in which they appear. Alternatively, elements or parts that appear in more than one figure may be labeled with different numerals in the different figures in which they appear. Dimensions of components and features shown in the figures are generally chosen for convenience and clarity of presentation and are not necessarily shown in scale. The figures are listed below.
Fig. 1 schematically illustrates a method for controlling an operation of a sensor, according to some embodiments;
Fig. 2 schematically illustrates a vehicle with multiple directional sensors having various characteristics, according to some embodiments;
Fig. 3 illustrates a block diagram of an electronic apparatus configured for controlling an operation of a sensor, according to some embodiments;
Fig. 4 schematically illustrates a setting wherein a first vehicle obtains driving-related information from a second vehicle, and adjusts an operation of a directional sensor, or a directional operation of sensors, therein, according to some embodiments;
Fig. 5 schematically illustrates a setting wherein a vehicle adjusts the operation of a first directional sensor by degrading the activity thereof, while adjusting the operation of a second directional sensor by enhancing the activity thereof, according to some embodiments;
Fig. 6 schematically illustrates a range coverage of sensor data in a vehicle, according to some embodiments; and,
Fig. 7 schematically illustrates a setting wherein a plurality of vehicles operate to share driving-related information, and adjusting an operation of respective directional sensors therein, according to some embodiments.

### Detailed Description of the Drawings

In the following description, various aspects of the disclosure will be described. For the purpose of explanation, specific configurations and details are set forth in order to provide a thorough understanding of the different aspects of the disclosure. However, it will also be apparent to one skilled in the art that the disclosure may be practiced without specific details being presented herein. Furthermore, well-known features may be omitted or simplified in order not to obscure the disclosure.

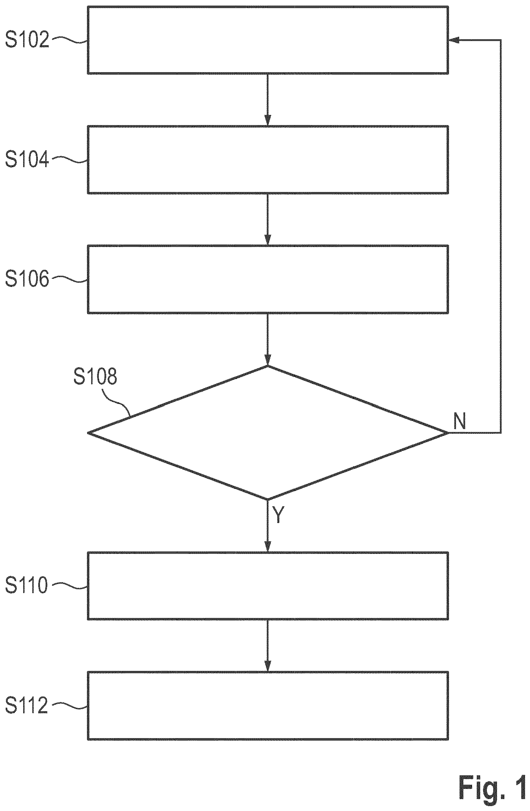

Reference is now made to Fig. 1, which schematically illustrates a method for controlling an operation of a sensor, according to some embodiments.

The method for adjusting or controlling an operation of a sensor in a vehicle (first vehicle) is disclosed, wherein the vehicle obtains information indicative of a location of a second vehicle s102, then the vehicle determines the relative position of the second vehicle s104 and optionally also determines the relative velocity of the second vehicle s106 for assessing whether the second vehicle is within a critical range of the vehicle s108.

If the second vehicle is not within a critical range of the vehicle, further monitoring of the location of the second vehicle s102 is conducted as well as relative position s104 and, optionally, relative velocity s106.

If the second vehicle is within a critical range of the vehicle, or alternatively, if the second vehicle is expected to be within a critical range of the vehicle, for example based on the relative position and relative velocity of the second vehicle, the vehicle receives driving-related data is from the second vehicle s110, which is analyzed and assessed for adjusting an operation of a sensor, such as a directional sensor, in the vehicle s112.

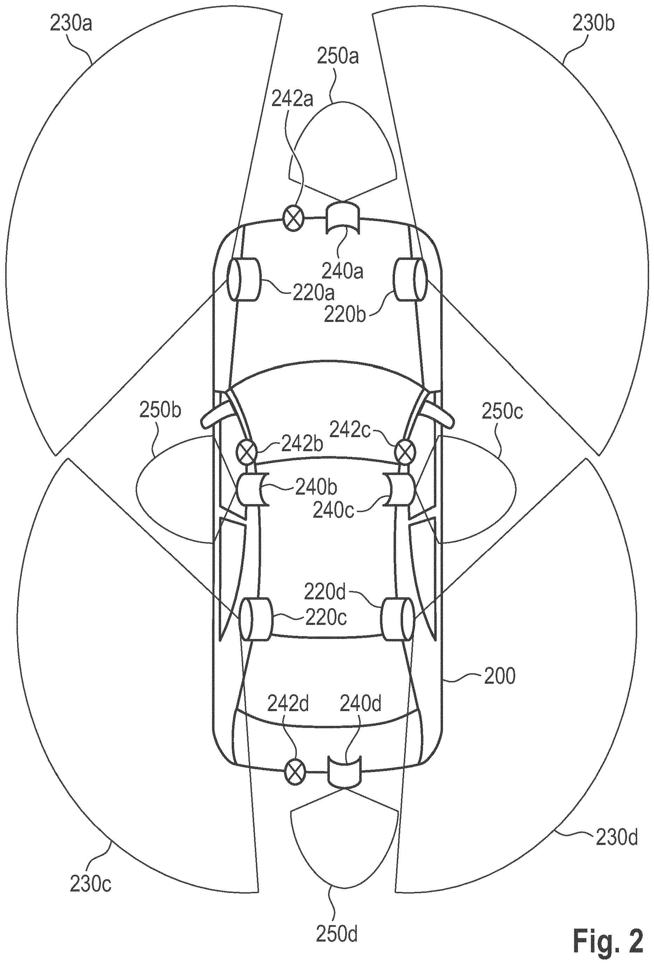

Reference is now made to Fig. 2, which schematically illustrates a vehicle 200 with multiple directional sensors having various characteristics, according to some embodiments.

The vehicle 200 supports automatic driving technology, which requires mapping the surrounding environment of the vehicle. As illustrated, multiple long-range directional sensors are used, such as first, second, third, and fourth directional sensor 220a, 220b, 220c, 220d, which include LiDAR sensors, each configured to provide information related to a different direction in the space, for example first, second, third, and fourth long-range directional sensor ranges 230a, 230b, 230c, 230d. Advantageously, a redundancy is achieved by an overlap in the ranges of each of the directional sensors.

Additionally, multiple short-range directional sensors are utilized in the vehicle, such as first, second, third, and fourth short-range directional sensors 240a, 240b, 240c, 240d, which include ultrasonic sensors or cameras, for obtaining information related to a closer range in the surrounding of the vehicle compared with the long-range directional sensors, such as first, second, third, and fourth short-range directional sensor ranges 250a, 250b, 250c, 250d.

The vehicle further includes alternative directional sensors, such as first, second, third, and fourth alternative mid-range directional sensors 240a, 240b, 240c, 240d, which includes camera sensors, configured for providing sensor redundancy for an enhanced safety and failure proofing profile.

According to some embodiments, an electronic apparatus operable in a vehicle is introduced, configured for controlling the operation of a directional sensor in the vehicle.

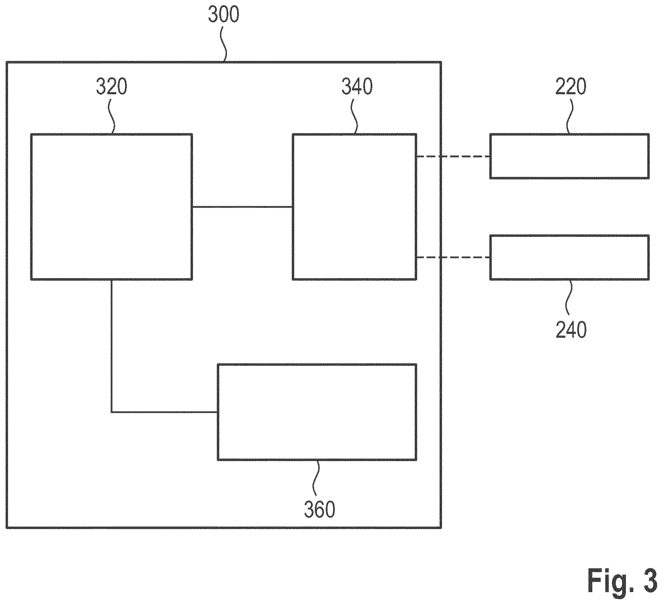

Reference is now made to Fig. 3, which illustrates a block diagram of an electronic apparatus 300 configured for controlling an operation of a sensor 220, 240, according to some embodiments.

Electronic apparatus includes a sensors I/O module 340 configured for facilitating data and/or control communication with at least one sensor for adjusting an operation thereof. The electronic apparatus also includes a communication module 360 configured for facilitating communication with a second vehicle, for example through V2V communication, for obtaining driving-related information from the second vehicle. A processor 320 in the electronic apparatus 300 is electrically coupled with the sensors I/O module and communication module 360.

The processor is configured to for executing instructions stored in a memory to obtain information indicative of a location of a second vehicle via the communication module, determine a position of the second vehicle relative to the vehicle, and based on the second vehicle being within a critical range of the vehicle, receive driving-related information from the second vehicle for adjusting an operation of at least one sensor in the vehicle based on the determined position of the second vehicle relative to the vehicle and the received driving-related information from the second vehicle.

According to some embodiment, based on the processor is further configured to adjust the operation of a first directional sensor in the vehicle by degrading the operation thereof, while enhancing the operation of a second directional sensor, based on the determined position of the second vehicle relative to the vehicle and the received driving-related information from the second vehicle.

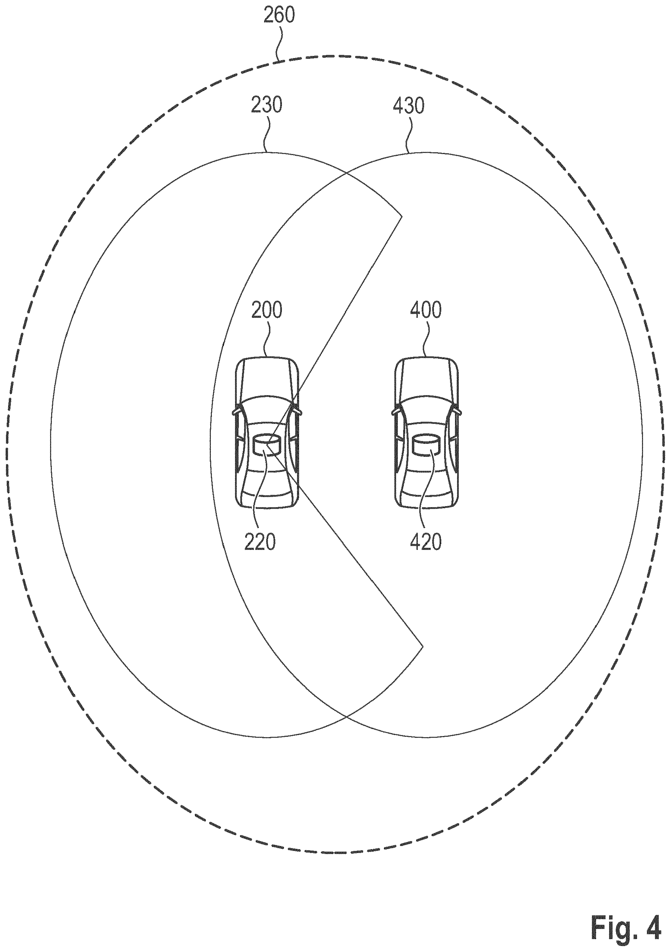

Reference is now made to Fig. 4, which schematically illustrates a setting wherein a first vehicle 200 obtains driving-related information 430 from a second vehicle 400, and adjusts an operation of a directional sensor 220, therein, according to some embodiments.

If a second vehicle 400 is detected within a critical range of the vehicle 200, a relative position and velocity of the second vehicle is determined, and driving-related information 430 of the second vehicle are received by the first vehicle 200. Based on the received driving-related information 430 of the second vehicle , the first vehicle determines that a operation of the directional sensor 220 can be adjusted, for example by degrading the operation of sensor directed towards the second vehicle 400, if information from the sensor 220 in this direction is redundant due to receiving the driving-related information of the second vehicle 430. According to some embodiments, the vehicle 200 derives a combined driving-related information or information range 260 from the adjusted driving-related information 230 of the vehicle in combination with the driving-related information or information range 430 of the second vehicle.

Determining whether to utilize the driving-related information of the second vehicle for adjusting the operation of the directional sensor 220 includes a context evaluation, wherein safety level requirements are assessed, and the driving-related information of the second vehicle is analyzed to determine if they match the assessed safety level requirements. If the safety level requirements are not met, the vehicle 220 utilizes the driving-related information of the second vehicle for various purposes, such as validation, increased redundancy, and the like, without adjusting the operation of the directional sensor 220.

Determining whether to degrade the directional sensor or not, to what extent to degrade the directional sensor, and whether to shut down the directional sensor, is further based on one or more of the quality of the driving-related information of the second vehicle, the safety level requirements, relative position of the second vehicle 400, or relative velocity of the second vehicle 400.

The safety level requirements determine various criteria for determining whether the driving-related information of the second vehicle can be utilized for adjusting the operation of the directional sensor. These criteria include coverage of the driving-related information of the second vehicle range 430 taking into consideration the relative position and velocity of the second vehicle, quality of signals obtained by the directional sensor 220 and/or driving-related information of the second vehicle such as a signal to noise ratio, as well as the quality of communication between the vehicle, including latency, bandwidth, packet loss rate, and the like.

In cases where the vehicle 200 includes a plurality of directional sensors, determining the operation of which of the direction is adjusted is based on the relative direction of the second vehicle 400, and the range or directionality of each of the directional sensors. For example, an operation of a directional sensor directed towards the second vehicle 400 is adjusted, while an operation of another directional sensor directed to the opposite direction remains unadjusted.

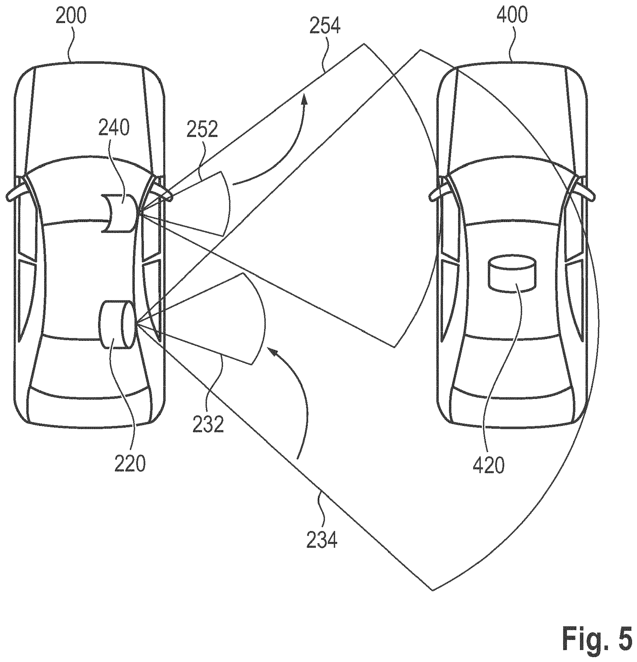

Reference is now made to Fig. 5, which schematically illustrates a setting wherein a vehicle 200 adjusts the operation of a first directional sensor 220 by degrading the activity thereof, while adjusting the operation of a second directional sensor 240 by enhancing the activity thereof, according to some embodiments.

When a second vehicle 400 is detected to be within a critical range of the vehicle 200, an operation of the first directional sensor 220 is degraded from a first operation mode 234 to a standby operation mode 232 as driving-related information of the second vehicle 430 is used instead. While the second vehicle 400 is within the critical range of the first vehicle 200, tracking the relative position and velocity of the second vehicle 400 could be vital, due to the physical proximity between the two vehicles. Accordingly, the operation of the second directional sensor 240 is adjusted from a normal mode 252 to an enhanced mode 254, allowing for more accurate measurements to be obtained related to the position and velocity of the second vehicle. Such enhanced operation provides the ability to accurately assess changes in the relative position and/or velocity of the second vehicle 400, and control the driving of the vehicle 200 or adjust the operation of the first directional sensor 220 in a timely manner.

Alternatively, or in addition to adjusting the operation of the second directional sensor 240, in some embodiments, the operation of the first directional sensor 220 is adjusted by adjusting the range of the directional sensor 220 to be adapted to provide measurements related to the position of the second vehicle.

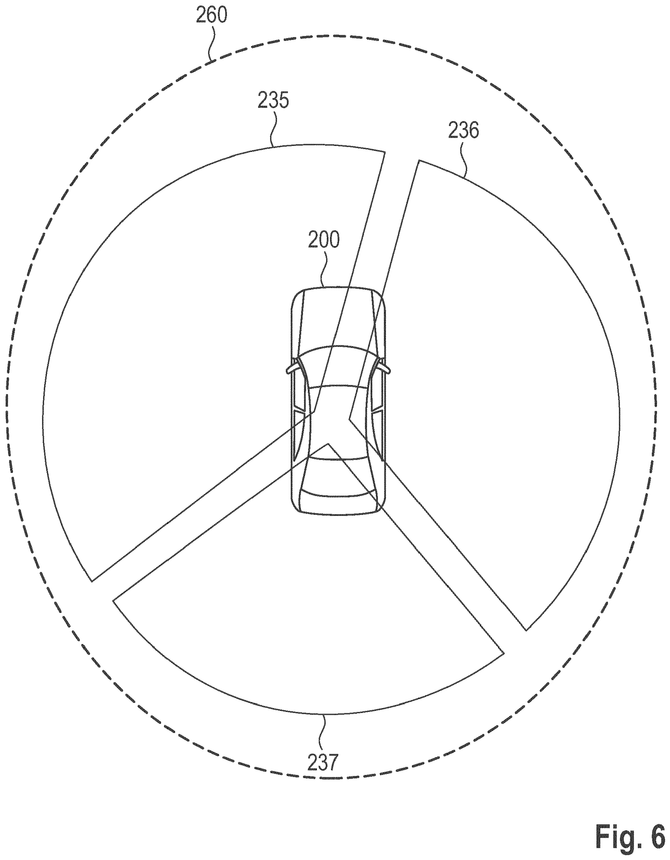

Reference is now made to Fig. 6, which schematically illustrates a range coverage of sensor data in a vehicle 200, according to some embodiments.

The vehicle 200 obtains driving related information from more than one vehicles within a critical range thereof, such that different driving related information ranges 235, 236, 237 are combined to provide a sufficient coverage of a combined driving-related information 260.

Advantageously, the various ranges 235, 236, 237 overlap, resulting in spatial redundancies. These redundancies compensate for change in relative position of the surrounding vehicles, creating a safety buffer wherein an operation of a directional sensor 220 in the vehicle 200 is timely adjusted when needed.

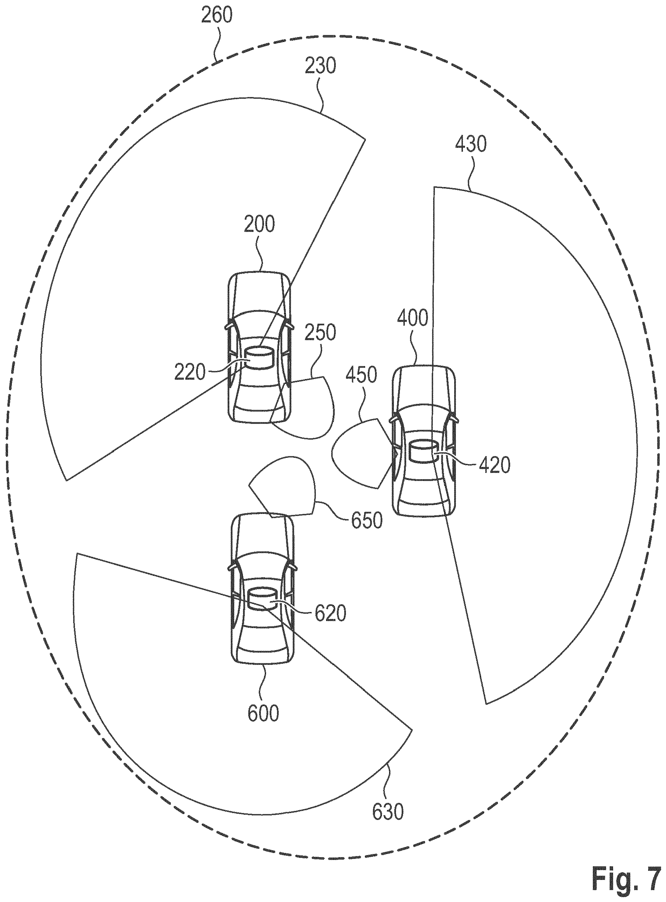

Reference is now made to Fig. 7, which schematically illustrates a setting wherein a plurality of vehicles 200, 400, 600 operate to share driving-related information 230, 430, 630, and adjusting an operation of respective directional sensors therein 220, 420, 620, according to some embodiments.

A first vehicle 200, a second vehicle 400, and a third vehicle 600 are within a critical range of one-another and establish a V2V communication therebetween for sharing respective driving-related information. Advantageously, driving-related information from the first, second, and third vehicles 230, 430, 630 are shared and combined for deriving a combined driving-related information range 260, allowing for adjusting the operation of directional sensors of each of the vehicles 220, 420, 620.

Each of the vehicles operates the directional sensor 220, 420, 620, or a second directional sensor (not shown), for sensing information related to the position of the other surrounding vehicles, such as short-range sensor information 250, 450, and 650.

Unless specifically stated otherwise, as apparent from the following discussions, it is appreciated that throughout the specification discussions utilizing terms such as "processing", "computing", "calculating", "determining", "estimating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices. In addition, the term "plurality" may be used throughout the specification to describe two or more components, devices, elements, parameters and the like.

Embodiments of the present disclosure may include apparatuses for performing the operations herein. This apparatus may be specially constructed for the desired purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system.

The disclosure may be described in the general context of computer-executable instructions, such as program modules, being executed by a computer. Generally, program modules include routines, programs, objects, components, data structures, and so forth, which perform particular tasks or implement particular abstract data types. The disclosure may also be practiced in distributed computing environments where tasks are performed by remote processing devices that are linked through a communications network. In a distributed computing environment, program modules may be located in both local and remote computer storage media including memory storage devices.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" or "comprising," when used in this specification, specify the presence of stated features, integers, steps, operations, elements, or components, but do not preclude or rule out the presence or addition of one or more other features, integers, steps, operations, elements, components, or groups thereof.

### Reference Signs

- 200: First vehicle
- 220: Directional sensor, sensor system with directional properties
- 220*: First, second, third, and fourth directional sensors
- 230: Driving-related information of the first vehicle
- 230*: First, second, third, and fourth long-range directional sensor ranges
- 232: Normal operation of the directional sensor
- 234: Degraded operation of the directional sensor
- 235: First directional driving-related information
- 236: Second directional driving-related information
- 237: Third directional driving-related information
- 240: Short-range directional sensor, Short-range sensor system
- 240*: First, second, third, and fourth short-range directional sensors
- 242*: First, second, third, and fourth alternative mid-range directional sensors
- 250*: First, second, third, and fourth short-range directional sensor ranges
- 252: Normal operation of short-range sensor
- 254: Enhanced operation of short-range sensor
- 260: Combined driving-related information
- 300: Electronic apparatus for controlling an operation of a directional sensor
- 320: Processing unit
- 340: Sensors I/O module
- 360: Communication module
- 400: Second vehicle
- 420: Sensor system of second vehicle
- 430: Driving-related information range of the second vehicle
- 450: Operation of short-range sensor of the second vehicle
- 600: Third vehicle
- 620: Sensor system of third vehicle
- 630: Driving-related information range of the third vehicle
- 650: Operation of short-range sensor of the third vehicle

## Claims

1. A method for controlling the operation of a directional sensor (220) in a vehicle (200), the method comprising:
obtaining information indicative of a location of a second vehicle (400);
determining a position of the second vehicle (400) relative to the vehicle (200);
based on the second vehicle being within a critical range of the vehicle (200), receiving driving-related information from the second vehicle (400); and
adjusting an operation of the directional sensor in the vehicle (200) based on the determined position of the second vehicle (400) relative to the vehicle (200) and the received driving-related information from the second vehicle (400),
wherein the received driving-related information from the second vehicle (400) includes a sensor measurement, or information derived from a sensor measurement.

2. The method of claim 1, wherein the information derived from a sensor measurement includes a detected road feature, a detected object in the vicinity of the vehicle, or directional warning information.

3. The method of claim 1, wherein adjusting the operation of the directional sensor comprises degrading the operation of the directional sensor based on the driving related information from the second vehicle.

4. The method of any of claims 1 to 3, further comprising adjusting an operation of a second sensor in the vehicle based on the determined position of the second vehicle relative to the vehicle.

5. The method of claim 4, wherein adjusting the operation of the second sensor comprises enhancing the operation of the second sensor based on the position of the second vehicle relative to the vehicle, wherein the second sensor is configured to provide measurements related to the location of the second vehicle.

6. The method of any of claims 1 to 5, further comprising transmitting to the second vehicle driving-related information of the vehicle.

7. The method of claim 6, wherein the driving-related information of the vehicle comprises information indicative of the adjusted operation of the directional sensor.

8. The method of any of claims 1 to 7, further comprising:
generating a combined driving-related information by combining the received driving-related information from the second vehicle with driving-related information of the vehicle; and
controlling a driving operation of the vehicle based on the combined driving-related information.

9. An electronic apparatus (300) operable in a vehicle (200) for controlling the operation of a directional sensor (220) in the vehicle (200), comprising:
a memory, configured to store instructions; and
at least one processor (320), electrically coupled with the memory and a directional sensor (220) in the vehicle (200), the directional sensor (220) being configured to obtain information related to an external environment of the vehicle (200),
wherein, based on executing stored instructions in the memory, the processor (320) is configured to:
obtain information indicative of a location of a second vehicle (400);
determine a position of the second vehicle (400) relative to the vehicle (200);
based on the second vehicle (400) being within a critical range of the vehicle (200), receive driving-related information from the second vehicle (400) including a sensor measurement or information derived from a sensor measurement; and
adjust an operation of the directional sensor (220) in the vehicle (200) based on the determined position of the second vehicle (400) relative to the vehicle (200) and the received driving-related information from the second vehicle (400).

10. The electronic apparatus (300) of claim 9, wherein based on executing stored instructions in the memory, the processor (320) is further configured to adjust the operation of the directional sensor (220) by degrading the operation of the directional sensor (220) based on the driving related information from the second vehicle.

11. The electronic apparatus (300) of any of claims 9 and 10, wherein based on executing stored instructions in the memory, the processor (320) is further configured to adjust an operation of a second sensor (240) in the vehicle based on the determined position of the second vehicle relative to the vehicle.

12. The electronic apparatus (300) of claim 11, wherein based on executing stored instructions in the memory, the processor (320) is further configured to adjust the operation of the second sensor (240) by enhancing the operation of the second sensor (240) based on the position of the second vehicle relative to the vehicle, wherein the second sensor (240) is configured to provide measurements related to the location of the second vehicle.

13. The electronic apparatus (300) of claim 12, wherein based on executing stored instructions in the memory, the processor (320) is further configured to:
generate a combined driving-related information by combining the received driving-related information from the second vehicle with driving-related information of the vehicle; and
provide a control signal for facilitating the driving of the vehicle based on the combined driving-related information.

14. A vehicle (200) comprising:
a directional sensor (220) configured to provide a signal indicative of a road feature, or an object in the vicinity of the vehicle (200);
a communication unit (360) configured to facilitate communication with at least a second vehicle for receiving driving-related information from the second vehicle; and
an electronic apparatus (300) according to any of claims 9 to 13,
wherein the electronic apparatus (300) is electrically coupled with the directional sensor (220) and the communication unit (360).

15. The vehicle (200) of claim 14, further comprising a second sensor (240) configured to provide a signal indicative of a location or a velocity of the second vehicle.

## Patentansprüche

1. Verfahren zur Steuerung des Betriebs eines Richtungssensors (220) in einem Fahrzeug (200), wobei das Verfahren umfasst:
Erhalten von Informationen, die einen Standort eines zweiten Fahrzeugs (400) anzeigen;
Bestimmen einer Position des zweiten Fahrzeugs (400) relativ zum Fahrzeug (200);
basierend darauf, dass das zweite Fahrzeug innerhalb eines kritischen Bereichs des Fahrzeugs (200) ist, Empfangen von fahrbezogenen Informationen vom zweiten Fahrzeug (400); und
Anpassen eines Betriebs des Richtungssensors im Fahrzeug (200) basierend auf der bestimmten Position des zweiten Fahrzeugs (400) relativ zum Fahrzeug (200) und den empfangenen fahrbezogenen Informationen vom zweiten Fahrzeug (400),
wobei die empfangenen fahrbezogenen Informationen vom zweiten Fahrzeug (400) eine Sensormessung oder von einer Sensormessung abgeleitete Informationen umfassen.

2. Verfahren nach Anspruch 1, wobei die von einer Sensormessung abgeleiteten Informationen ein detektiertes Straßenmerkmal, ein detektiertes Objekt in der Nachbarschaft des Fahrzeugs oder Richtungswarnungsinformationen umfassen.

3. Verfahren nach Anspruch 1, wobei das Anpassen des Betriebs des Richtungssensors ein Herabstufen des Betriebs des Richtungssensors basierend auf den fahrbezogenen Informationen vom zweiten Fahrzeug umfasst.

4. Verfahren nach einem der Ansprüche 1 bis 3, ferner umfassend ein Anpassen des Betriebs eines zweiten Sensors im Fahrzeug basierend auf der bestimmten Position des zweiten Fahrzeugs relativ zum Fahrzeug.

5. Verfahren nach Anspruch 4, wobei das Anpassen des Betriebs des zweiten Sensors ein Heraufstufen des Betriebs des zweiten Sensors basierend auf der Position des zweiten Fahrzeugs relativ zum Fahrzeug umfasst, wobei der zweite Sensor zum Bereitstellen von Messungen in Bezug auf den Standort des zweiten Fahrzeugs ausgelegt ist.

6. Verfahren nach einem der Ansprüche 1 bis 5, ferner umfassend ein Senden von fahrbezogenen Informationen des Fahrzeugs an das zweite Fahrzeug.

7. Verfahren nach Anspruch 6, wobei die fahrbezogenen Informationen des Fahrzeugs Informationen umfassen, die den angepassten Betrieb des Richtungssensors anzeigen.

8. Verfahren nach einem der Ansprüche 1 bis 7, ferner umfassend:
Erzeugen einer kombinierten fahrbezogenen Information durch Kombinieren der empfangenen fahrbezogenen Informationen des zweiten Fahrzeugs mit den fahrbezogenen Informationen des Fahrzeugs; und
Steuern des Fahrbetriebs des Fahrzeugs basierend auf der kombinierten fahrbezogenen Information.

9. Elektronische Vorrichtung (300), die in einem Fahrzeug (200) betrieben werden kann, zum Steuern des Betriebs eines Richtungssensors (220) im Fahrzeug (200), umfassend:
einen Speicher, der zum Speichern von Anweisungen ausgelegt ist; und
mindestens einen Prozessor (320), der elektrisch mit dem Speicher und einem Richtungssensor (220) des Fahrzeugs (200) gekoppelt ist,
wobei der Richtungssensor (220) so ausgelegt ist, dass er Informationen in Bezug auf eine äußere Umgebung des Fahrzeugs (200) erhält,
wobei der Prozessor (320) basierend auf dem Ausführen von im Speicher gespeicherten Anweisungen ausgelegt ist zum:
Erhalten von Informationen, die einen Standort eines zweiten Fahrzeugs (400) anzeigen;
Bestimmen einer Position des zweiten Fahrzeugs (400) relativ zum Fahrzeug (200);
basierend darauf, dass das zweite Fahrzeug (400) innerhalb eines kritischen Bereichs des Fahrzeugs (200) ist, Empfangen von fahrbezogenen Informationen vom zweiten Fahrzeug (400), die eine Sensormessung oder von einer Sensormessung abgeleitete Informationen umfassen; und
Anpassen eines Betriebs des Richtungssensors (220) im Fahrzeug (200) basierend auf der bestimmten Position des zweiten Fahrzeugs (400) relativ zum Fahrzeug (200) und den empfangenen fahrbezogenen Informationen vom zweiten Fahrzeug (400).

10. Elektronische Vorrichtung (300) nach Anspruch 9, wobei der Prozessor (320) basierend auf dem Ausführen von im Speicher gespeicherten Anweisungen ferner so ausgelegt ist, dass er den Betrieb des Richtungssensors (220) anpasst, indem er den Betrieb des Richtungssensors (220) basierend auf den fahrbezogenen Informationen vom zweiten Fahrzeug herabstuft.

11. Elektronische Vorrichtung (300) nach einem der Ansprüche 9 und 10, wobei der Prozessor (320) basierend auf dem Ausführen von im Speicher gespeicherten Anweisungen ferner so ausgelegt ist, dass er einen Betrieb eines zweiten Sensors (220) im Fahrzeug basierend auf der bestimmten Position des zweiten Fahrzeug relativ zum Fahrzeug anpasst.

12. Elektronische Vorrichtung (300) nach Anspruch 11, wobei der Prozessor (320) basierend auf dem Ausführen von im Speicher gespeicherten Anweisungen ferner so ausgelegt ist, dass er den Betrieb des zweiten Sensors (240) anpasst, indem er den Betrieb des zweiten Sensors (240) basierend auf der Position des zweiten Fahrzeugs relativ zum Fahrzeug heraufstuft, wobei der zweite Sensor (240) zum Bereitstellen von Messungen in Bezug auf den Standort des zweiten Fahrzeugs ausgelegt ist.

13. Elektronische Vorrichtung (300) nach Anspruch 12, wobei der Prozessor (320) basierend auf dem Ausführen von im Speicher gespeicherten Anweisungen ferner konfiguriert ist zum:
Erzeugen einer kombinierten fahrbezogenen Information durch Kombinieren der empfangenen fahrbezogenen Informationen des zweiten Fahrzeugs mit den fahrbezogenen Informationen des Fahrzeugs; und
Steuern des Fahrbetriebs des Fahrzeugs basierend auf der kombinierten fahrbezogenen Information.

14. Fahrzeug (200), umfassend:
einen Richtungssensor (220), der zum Bereitstellen eines Signals ausgelegt ist, das ein Straßenmerkmal oder ein Objekt in der Nachbarschaft des Fahrzeugs (200) anzeigt;
eine Kommunikationseinheit (360), die so ausgelegt ist, dass sie Kommunikation mit mindestens einem zweiten Fahrzeug ermöglicht, um fahrbezogene Informationen vom zweiten Fahrzeug zu empfangen; und
eine elektronische Vorrichtung (300) nach einem der Ansprüche 9 bis 13,
wobei die elektronische Vorrichtung (300) elektrisch mit dem Richtungssensor (220) und der Kommunikationseinheit (360) gekoppelt ist.

15. Fahrzeug (200) nach Anspruch 14, ferner umfassend einen zweiten Sensor (240), der zum Bereitstellen eines Signals ausgelegt ist, das einen Standort oder eine Geschwindigkeit des zweiten Fahrzeugs anzeigt.

## Revendications

1. Procédé de commande du fonctionnement d'un capteur directionnel (220) dans un véhicule (200), le procédé comprenant :
l'obtention d'informations indiquant un emplacement d'un deuxième véhicule (400) ;
la détermination d'une position du deuxième véhicule (400) par rapport au véhicule (200) ;
lorsque le deuxième véhicule se situe dans un rayon critique du véhicule (200), la réception d'informations liées à la conduite en provenance du deuxième véhicule (400) ; et
l'ajustement du fonctionnement du capteur directionnel dans le véhicule (200) sur la base de la position déterminée du deuxième véhicule (400) par rapport au véhicule (200) et des informations liées à la conduite reçues en provenance du deuxième véhicule (400),
les informations liées à la conduite reçues en provenance du deuxième véhicule (400) comportant une mesure de capteur, ou des informations déduites d'une mesure de capteur.

2. Procédé selon la revendication 1, les informations déduites d'une mesure de capteur comportant une caractéristique routière détectée, un objet détecté dans le voisinage du véhicule, ou des informations d'alerte directionnelles.

3. Procédé selon la revendication 1, l'ajustement du fonctionnement du capteur directionnel comprenant l'altération du fonctionnement du capteur directionnel sur la base des informations liées à la conduite en provenance du deuxième véhicule.

4. Procédé selon l'une quelconque des revendications 1 à 3, comprenant en outre l'ajustement du fonctionnement d'un deuxième capteur dans le véhicule sur la base de la position déterminée du deuxième véhicule par rapport au véhicule.

5. Procédé selon la revendication 4, l'ajustement du fonctionnement du deuxième capteur comprenant l'amélioration du fonctionnement du deuxième capteur sur la base de la position du deuxième véhicule par rapport au véhicule, le deuxième capteur étant configuré pour fournir des mesures liées à l'emplacement du deuxième véhicule.

6. Procédé selon l'une quelconque des revendications 1 à 5, comprenant en outre la transmission au deuxième véhicule d'informations liées à la conduite du véhicule.

7. Procédé selon la revendication 6, les informations liées à la conduite du véhicule comprenant des informations indiquant le fonctionnement ajusté du capteur directionnel.

8. Procédé selon l'une quelconque des revendications 1 à 7, comprenant en outre :
la génération d'informations liées à la conduite combinées par combinaison des informations liées à la conduite reçues en provenance du deuxième véhicule avec des informations liées à la conduite du véhicule ; et
la commande d'une manœuvre de conduite du véhicule sur la base des informations liées à la conduite combinées.

9. Appareil électronique (300) utilisable dans un véhicule (200) pour commander le fonctionnement d'un capteur directionnel (220) dans le véhicule (200), comprenant :
une mémoire, configurée pour stocker des instructions ; et
au moins un processeur (320), couplé électriquement à la mémoire et à un capteur directionnel (220) dans le véhicule (200),
le capteur directionnel (220) étant configuré pour obtenir des informations relatives à un environnement externe du véhicule (200),
sur la base de l'exécution d'instructions stockées dans la mémoire, le processeur (320) étant configuré pour :
obtenir des informations indiquant un emplacement d'un deuxième véhicule (400) ;
déterminer une position du deuxième véhicule (400) par rapport au véhicule (200) ;
lorsque le deuxième véhicule (400) se situe dans un rayon critique du véhicule (200), recevoir des informations liées à la conduite en provenance du deuxième véhicule (400), comportant une mesure de capteur ou des informations déduites d'une mesure de capteur ; et
ajuster le fonctionnement du capteur directionnel dans le véhicule (200) sur la base de la position déterminée du deuxième véhicule (400) par rapport au véhicule (200) et des informations liées à la conduite reçues en provenance du deuxième véhicule (400).

10. Appareil électronique (300) selon la revendication 9, sur la base de l'exécution d'instructions stockées dans la mémoire, le processeur (320) étant configuré en outre pour ajuster le fonctionnement du capteur directionnel (220) en altérant le fonctionnement du capteur directionnel (220) sur la base des informations liées à la conduite en provenance du deuxième véhicule.

11. Appareil électronique (300) selon l'une quelconque des revendications 9 et 10, sur la base de l'exécution d'instructions stockées dans la mémoire, le processeur (320) étant configuré en outre pour ajuster le fonctionnement d'un deuxième capteur (240) dans le véhicule sur la base de la position déterminée du deuxième véhicule par rapport au véhicule.

12. Appareil électronique (300) selon la revendication 11, sur la base de l'exécution d'instructions stockées dans la mémoire, le processeur (320) étant configuré en outre pour ajuster le fonctionnement du deuxième capteur (240) en améliorant le fonctionnement du deuxième capteur (240) sur la base de la position du deuxième véhicule par rapport au véhicule, le deuxième capteur (240) étant configuré pour fournir des mesures liées à l'emplacement du deuxième véhicule.

13. Appareil électronique (300) selon la revendication 12, sur la base de l'exécution d'instructions stockées dans la mémoire, le processeur (320) étant configuré en outre pour générer des informations liées à la conduite combinées en combinant le informations liées à la conduite reçues en provenance du deuxième véhicule avec des informations liées à la conduite du véhicule ; et
fournir un signal de commande pour faciliter la conduite du véhicule sur la base des informations liées à la conduite combinées.

14. Véhicule (200), comprenant :
un capteur directionnel (220) configuré pour fournir un signal indiquant une caractéristique routière ou un objet dans le voisinage du véhicule (200) ;
une unité de communication (360) configurée pour faciliter la communication avec au moins un deuxième véhicule pour recevoir des informations liées à la conduite en provenance du deuxième véhicule ; et
un appareil électronique (300) selon l'une quelconque des revendications 9 à 13,
l'appareil électronique (300) étant couplé électriquement au capteur directionnel (220) et à l'unité de communication (360).

15. Véhicule (200) selon la revendication 14, comprenant en outre un deuxième capteur (240) configuré pour fournir un signal indiquant un emplacement ou une vitesse du deuxième véhicule.
